# EUROPÄISCHE PATENTANMELDUNG

(11) **EP 0 716 137 A2**
(43) Veröffentlichungstag der Anmeldung: **12.06.1996**
(21) Anmeldenummer: 95117571.0
(22) Anmeldetag: 08.11.1995
(51) Int. Cl.: C09J 7/04

(54) **Rückseitenbeschichtetes Klebeband auf Nähvliesbasis**

(30) Priorität: 25.11.1994 DE 4442092
(71) Anmelder: Beiersdorf Aktiengesellschaft, D-20245 Hamburg (DE)
(72) Erfinder: Ganschow, Frank, D-25335 Elmshorn (DE)

(57) **Zusammenfassung**

Klebeband mit einem Nähvliesträger, dessen Unterseite mit einer Klebebeschichtung versehen ist,
dadurch gekennzeichnet, daß auf der Oberseite des Trägers zunächst eine Beschichtung aus Schaum und anschließend eine aus Lack oder nur eine Beschichtung aus Lack aufgebracht ist.

## Beschreibung

Die Erfindung bezieht sich auf ein Klebeband, das aus einem Nähvliesträger besteht, auf dessen Oberseite zunächst eine Beschichtung aus Schaum und anschließend eine aus Lack oder nur eine Beschichtung aus Lack aufgebracht ist und der auf seiner Unterseite mit einer Klebebeschichtung versehen ist.

Klebebänder mit einem Nähvlies als textilen Träger sind aus DE - GM 94 01 037 bekannt, wobei bei diesem Klebeband bevorzugt druckempfindliche Haftklebebeschichtungen als Klebebeschichtung eingesetzt werden.
Diese Klebebänder sind zwar einfach im Aufbau, zeigen aber erhebliche Nachteile in der praktischen Anwendung. Die Oberflächen solcher Vliesträger mit ihren vielen kleinen Erhebungen und dazwischen liegenden Tälern ergeben zunächst leichter abrollbare Klebebänder, aber allgemein sind unebene Trägermaterialien für Klebebänder eher unerwünscht, denn sie führen bei der Anwendung zu mangelhaften Verklebungen, etwa beim mehrlagigen Umwickeln von Kabelbäumen. Die Haftwirkung des Klebebandes am neuen Haftgrund wird zusätzlich dadurch verringert, daß durch die Verwendung eines Textils als Träger und durch den Verzicht auf eine Behandlung der Trägerrückseite sich beim Abrollen des Klebebandes von einer spiralförmigen Rolle zeigt, daß einzelne Stoffasern aus dem Bereich der an der Oberfläche des Trägers freiliegenden Fasern an der Klebebeschichtung verbleiben. Weiterhin ist das textile Trägermaterial durch äußere mechanische Beanspruchung einem erhöhten Verschleiß ausgesetzt, was die Standzeit des Klebebandes im praktischen Gebrauch reduziert.

Der hier vorliegenden Erfindung liegt die Aufgabe zugrunde, ein Klebeband der schon beschriebenen Art zu verbessern, insbesondere so, daß beim Abwickeln von einer spiralförmigen Rolle keine Verschlechterung der Haftfähigkeit des Klebebandes zu beobachten ist und gleichzeitig die Verschleißfestigkeit des Klebebandes erhöht wird.

Gelöst wird diese Aufgabe durch ein Klebeband mit einem Nähvliesträger, dessen Rückseite mit einer Schaum- und Lackschicht oder nur mit einer Lackschicht versehen wird, wodurch eine glatte Rückseite auf dem Klebeband entsteht, die die Standzeit des Trägermaterials durch den mechanischen Schutz der aufgebrachten Schaum/Lackschichtkombination bzw. der Lackschicht erhöht und gleichzeitig eine optimale Haftfläche beim mehrlagigen Umwickeln darstellt. Weiterhin wird die Einschränkung der Haftfähigkeit der Klebebeschichtung beim Abrollen von einer Rolle verringert.

Als Träger für das Klebeband kommt ein Nähvlies zum Einsatz. Ein Nähvlies wird aus einem Vliesmaterial mit einer Vielzahl parallel zueinander verlaufender Nähte gebildet. Diese Nähte entstehen durch das Einnähen oder Nähwirken von textilen Fäden. Ein derartiges Vlies wird beispielsweise auf Nähwirkmaschinen des Typs "Maliwatt" der Firma Malimo schon seit längerer Zeit hergestellt und ist unter anderem bei den Firmen Cottano GmbH und Techtex GmbH beziehbar. Als Ausgangsmaterialien für den textilen Träger sind insbesondere Polyester-, Polypropylen- oder Baumwollfasern vorgesehen. Die vorliegende Erfindung ist aber nicht auf die genannten Materialien beschränkt, sondern es können eine Vielzahl weiterer Fasern zur Herstellung des Vlieses eingesetzt werden.

Die Beschichtung des Trägers mit Schaum und Lack erfolgt bevorzugt nach dem im folgenden beschriebenen Verfahren. Zunächst wird nach dem Rakelverfahren eine Acrylatdispersion auf das Trägermaterial geschäumt. Das entstehende Zwischenprodukt wird im Anschluß kalandert, was zum einen zu einer Verdichtung und zum anderen zu einer Anvernetzung des Schaumes führt, bevor eine Lackschicht aus Acrylatlack ebenfalls nach dem Rakelverfahren über der Schaumschicht aufgetragen wird.
Die Beschichtung der Klebeseite auf dem Träger, insbesondere mit einer selbstklebenden Beschichtung, kann in üblicher Weise erfolgen. Vorteilhaft ist die herkömmliche Durchführung der Beschichtung mit Streichbalken und Lösungsmittelmassen, besser aber erfolgt diese berührungslos oder fast berührungslos mittels Siebdrucktechnik (vergleiche DE - PS 3.346.100), wobei eine vollflächige oder auch segmentartige Klebebeschichtung möglich ist. Bezüglich der günstigsten Parameter wird ausdrücklich auf diese Patentschrift DE - PS 3.346.100 bezug genommen, insbesondere zur Viskosität und Art des Klebers, zu den verwendeten Sieben, Bahngeschwindigkeiten und sonstigen Maßnahmen. Aber auch die Beschichtung mittels Tiefdruck und Sprühen kann zur Anwendung kommen.

Das Klebeband kann in vielen Variationen hergestellt werden. Eine Möglichkeit wird im anschließenden Beispiel dargelegt:

### Beispiel:

Auf einen Vliesträger mit einem Flächengewicht von 100 g/m² aus Polyamid, der von der Firma Techtex GmbH bezogen werden kann, wird an einem Spannrahmentrockner eine geschäumte Acrylatdispersion (Wasseranteil: 50 Gew.-%) aufgebracht. Der Auftrag erfolgt bei einer Bahngeschwindigkeit von 30 m/min in einem Strich im Rakelverfahren, wobei der Rakel eine Position von 25° zum Zenit der Streichunterwalze einnimmt, so daß sich ein Schaumgewicht von 250 g/l ergibt. Anschließend erfolgt die Trocknung des schaumbestrichenen Trägers bei einer durchschnittlichen Temperatur von 120 °C im Spannrahmentrockner. Nach der Trocknung wird dieser in-line bei 150°C bis 180 °C und einem Druck von 10 to kalandert (was zum einen zu einer Verdichtung und zum anderen zu einer Anvernetzung des Schaumes führt).
Die Lackierung der Rückseite des schaumbeschichteten Trägers erfolgt ebenfalls in einem Spannrahmentrockner bei einer Bahngeschwindigkeit von 50 m/min, wobei zehn Gramm halogenfreier Acrylatlack (Primal 225 von der Firma Rohm und Haas) pro Quadratmeter beschichtet werden. Die Trocknung der Lackschicht findet bei 160 °C im Spannrahmentrockner statt, was gleichzeitig eine Kondensation des Schaumes bewirkt. Die Naturkautschuk/Harz/Benzinklebemasse wird an einer Hängeanlage bei einer Bahngeschwindigkeit von 50 m/min und einer Temperatur von 60 °C ebenfalls im Rakelverfahren, wobei der Messerrakel senkrecht zur Streichunterwalze steht, aufgetragen.

## Patentansprüche

1. Klebeband mit einem Nähvliesträger, dessen Unterseite mit einer Klebebeschichtung versehen ist,
dadurch gekennzeichnet, daß auf der Oberseite des Trägers zunächst eine Beschichtung aus Schaum und anschließend eine aus Lack oder nur eine Beschichtung aus Lack aufgebracht ist.

2. Klebeband nach Anspruch 1,
dadurch gekennzeichnet, daß das Nähvlies insbesondere aus Polyester-, Polypropylen-, Viskose-, Polyacryl- oder Zelllulosefasern besteht.

3. Klebeband nach Anspruch 1,
dadurch gekennzeichnet, daß die Schaumschicht durch das Aufschäumen einer halogenfreier Acrylatdispersion aufgebracht ist.

4. Klebeband nach Anspruch 1,
dadurch gekennzeichnet, daß die Beschichtung mit dem Schaum insbesondere eine Dicke zwischen 20 und 60 µm aufweist.

5. Klebeband nach Anspruch 1,
dadurch gekennzeichnet, daß ein halogenfreier Acrylatlack aufgebracht ist.

6. Klebeband nach Anspruch 1,
dadurch gekennzeichnet, daß die Beschichtung mit dem Lack insbesondere eine Dicke von 0,5 bis 5 µm aufweist.

7. Klebeband nach Anspruch 1,
dadurch gekennzeichnet, daß die Klebebeschichtung eine selbstklebende Beschichtung ist.

8. Verwendung eines Klebebandes nach Anspruch 1 zum Bandagieren von Kabelbäumen, wie sie insbesondere in der Automobilindustrie eingesetzt werden.
